# EUROPEAN PATENT APPLICATION

(11) **EP 0 687 827 A1**
(43) Date of publication of application: **20.12.1995**
(21) Application number: 95850106.6
(22) Date of filing: 12.06.1995
(51) Int. Cl.: F16C 39/06

(54) **Hybrid magnetic/foil gas bearings**

(30) Priority: 13.06.1994 US 259191
(71) Applicant: MECHANICAL TECHNOLOGY INCORPORATED, Latham, NY 12110 (US)
(72) Inventor: Heshmai, Hooshang, Niskyuna, New York 12309 (US); Ming Chen, Hsiang, Latham, New York 12110 (US)
(74) Representative: Perklev, Karin Cecilia

(57) **Abstract**

The apparatus includes a hybrid bearing with components of passive or active magnetic bearings in various combinations with foil gas bearings to counteract radial and/or axial excursions of a rotating shaft.

## Description

### BACKGROUND OF THE INVENTION

### Field of the Invention

The invention pertains to the combination of an actively controlled or passive magnetic bearing and a foil gas bearing into a hybrid bearing.

### Description of the Prior Art

It is well-known in the prior art that an actively controlled magnetic bearing provides low speed lifting, damping at critical speeds and dynamic force cancellation. It is similarly well-known that a foil gas bearing provides high speed load capacity, high frequency rotor stability and bearing weight saving.

However, it is also known that the above-identified advantages of active magnetic bearings are not typically identified with foil gas bearings, and vice versa.

### OBJECTS AND SUMMARY OF THE INVENTION

It is therefore an object of this invention to provide a bearing with low speed lifting.

It is therefore a further object of this invention to provide a bearing with damping at critical speeds.

It is therefore a still further object of this invention to provide a bearing with dynamic force cancellation.

It is therefore a still further object of this invention to provide a bearing with high speed load capacity.

It is therefore a still further object of this invention to provide a bearing with high frequency rotor stability.

It is therefore a still further object of this invention to provide a bearing which accomplishes the above objects but remains light in weight.

It is therefore a final object of this invention to provide a hybrid bearing which includes an actively controlled magnetic portion and a foil gas portion.

The apparatus of the present invention includes a bearing with both magnetic and foil gas characteristics.

A foil gas bearing is a type of improved hydrodynamic gas bearing. Its load-carrying surface is made with thin steel sheets with polytetrafluoroethylene coating. The sheets are separated from a bearing ring by resilient foil bumps working as springs. Sometimes, foil bumps are placed between the ring and the bearing housing to increase the alignment capability. The resilient surface tends to even the bearing load and makes the bearing clearance change and alignment less sensitive. The foil gas bearings are therefore ideal for high-speed rotor applications. They need no special lubricant or can conveniently use process gases or air as working fluid with no process contamination. However, like types of gas bearings, the gas film provides little damping and the rotor may become unstable at high speeds. Coulomb damping does exist when the support bumps move relative to the ring and the housing under radial load. Therefore, special coating such as copper is spattered on the bumps to achieve an optimal frictional coefficient between the bumps and the housing. If the bearing environment temperature is not too high, elastomer O-rings may be used to replace the bumps between the ring and the housing to achieve the damping. These passive damping mechanisms require careful design and testing for each application. The required effort can be expensive and it makes a large quantity production of the foil gas bearing difficult. An active damping mechanism which supplies an optimal amount of damping to the support between the ring and the housing in order to eliminate the development effort with an inexpensive damper device.

### BRIEF DESCRIPTION OF THE DRAWINGS

Further objects and advantages of the invention will become apparent from the following description and claims, and from the accompanying drawings, wherein:

Figure 1 is a plan view in cross section of radial hybrid bearing of the present invention, as viewed parallel to the axis of rotation of the shaft.

Figure 2 is a plan view in cross section of a radial hybrid bearing of the present invention, as viewed along plane 2-2 in Figure 1, perpendicular to the axis of rotation of the shaft.

Figure 3 is a plan view in cross section of a thrust hybrid bearing of the present invention.

Figure 4 a plan view in cross section of an embodiment of the present invention using a passive magnetic bearing with a rotor and stator with magnetic rings of alternating polarity.

Figure 5 is a perspective view of an embodiment of the present invention including a circular foil gas thrust bearing.

Figure 6 is a plan view of yet another embodiment of the present invention including a cylindrical foil gas radial bearing.

Figure 7 is a plan view of an embodiment of the present invention which uses both a foil gas bearing and electromagnets to counteract radial vibrations of a rotating shaft.

Figure 8 is a plan view along plane 8-8 of Figure 7.

Figure 9 is a plan view of an embodiment of the present invention which uses a foil gas bearing, permanent magnets and electromagnets to counteract thrust vibrations of a rotating shaft.

Figure 10 is a plan view of a magnetic/foil gas bearing embodiment of the present invention.

Figure 11 shows the magnetic/foil gas bearing in more detail.

### DETAILED DESCRIPTION OF THE PREFERRED EMBODIMENTS

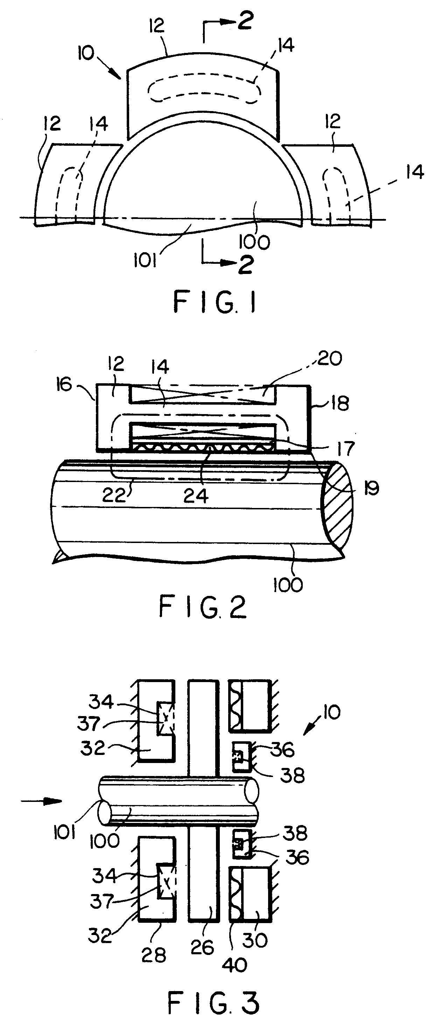

Referring now to the drawings in detail wherein like numerals refer to like elements throughout the several views, one sees that Figure 1 is a plan view of the hybrid magnetic bearing 10 as viewed parallel to the axis of rotation 101 of shaft 100. Figure 1 further illustrates an end view of the U-shaped cores 12 of the magnetic hybrid bearing 10. Inner supporting beams 14 of U-shaped cores 12 (shown in detail in Figure 2) are illustrated in phantom in Figure 1.

As shown in Figure 2, U-shaped cores 12 each include outer legs 16, 18 which are perpendicular to bearing 10 and are spaced apart by inner supporting beam 14. Inward cavity 17 is formed inwardly from inner supporting beam 14 facing toward shaft 100 and outward cavity 19 is formed outwardly from inner supporting beam 14 facing away from shaft 100 and toward an exterior of bearing 10. Inner supporting beam 14 further serves as a core for magnetizing coil 20 which is formed within inward cavity 17 and outward cavity 19 by winding or spooling insulated electrical wire therearound through which electrical current is transmitted from an external source (not shown) thereby forming magnetic flux path 22 as illustrated.

Magnetizing coil 20 extends within inward cavity 17 so as to leave a gap between coil 20 and shaft 100 wherein foil gas bearing 24 is formed perpendicular to shaft 100.

Figure 3 illustrates a second embodiment of the thrust hybrid bearing 10. Shaft 100 includes magnetic rotor 26 which is concentric with shaft 100, is parallel thereto, and rotates therewith. Magnetic rotor 26 rotates between and parallel to stator walls 28, 30. Stator wall 28 includes a longitudinally (i.e., in the direction of axis of rotation 101 of shaft 100) inwardly facing C-shaped magnetic ring 32 with a cavity 34 including magnetizing coil 37 inwardly facing toward rotor 26. Magnetic ring 32 is parallel to magnetic rotor and concentric about the axis of rotation 101 of shaft 100. Stator wall 30 encloses a magnetic thrust bearing 36 with a magnetizing coil 38. Magnetic thrust bearing 36 is parallel to magnetic rotor 26 and magnetic ring 32 and is concentric about the axis of rotation 101 of shaft 100. Magnetic thrust bearing 36 further includes foil gas bearing 40 on a longitudinally inward face 40 thereof immediately adjacent to magnetic rotor 26.

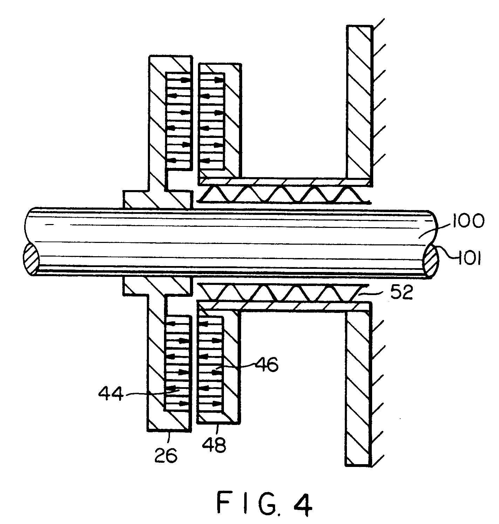

Figure 4 discloses an embodiment of the passive magnetic bearing 10. Shaft 100 rotates about axis 101. Rotor 26 includes a saucer-shaped structure with, from the perspective of Figure 4, a rightwardly pointing circumferential lip 42 with successive magnetic rotor rings 44 of alternating polarity. Magnetic rotor rings 44 align with stationary magnetic stator rings 46 of corresponding polarity. Magnetic stator rings 46 are held in place by stator 28 which includes, from the perspective of Figure 4, a leftwardly point circumferential lip 48 (which faces circumferential lip 42 of rotor 26). Radially inward from stator 28 is cylindrical passageway 50 through which shaft 100 passes. The walls of passageway 50 include foil journal bearing 52 which abuts shaft 100 and counteracts radial excursions thereof. The alignment of magnetic rings 44 and 46 counteract axial or thrust excursions of shaft 100 while foil gas bearing 52 counteracts radial excursions of shaft 100.

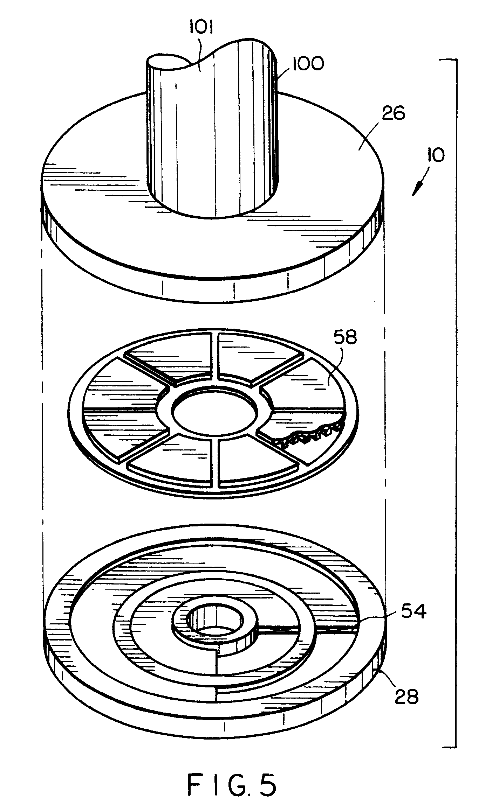

Figure 5 is a perspective view of an embodiment of magnetic bearing 10 wherein the magnetic bearing stator 28 is disk-shaped with circumferentially wound electromagnetic coils 54. Stator 28 includes, from the perspective of Figure 5, an upwardly point circumferential lip 56 into which a circular foil gas bearing 58 is inserted. Shaft 100, which rotates on axis 101, includes rotor 26 in the form of a thrust runner which abuts the magnetic bearino stator. In this embodiment, the circular foil gas bearing 58 is designed to counteract longitudinal or thrust excursions of shaft 100.

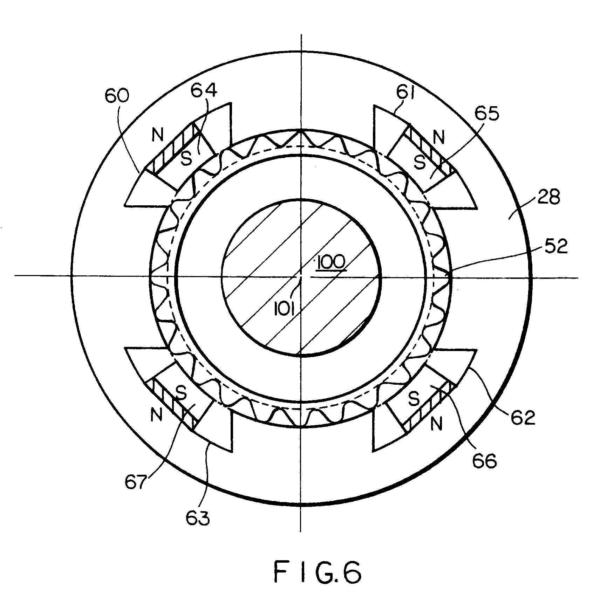

Figure 6 discloses yet another embodiment of magnetic rotor 10. Shaft 100 rotates on axis 101. Radially outward from shaft 100 is foil gas bearing 52 around an entire circumference of shaft 100. Stator 28 includes lateral coil slots 60, 61, 62, 63 with a central radially oriented core (not shown) around which wire is spooled to form electromagnetic coils 64, 65, 66, 67. Electromagnetic coils 64, 65, 66, 67 interact with foil gas bearing 52 to counteract radial excursions of shaft 100.

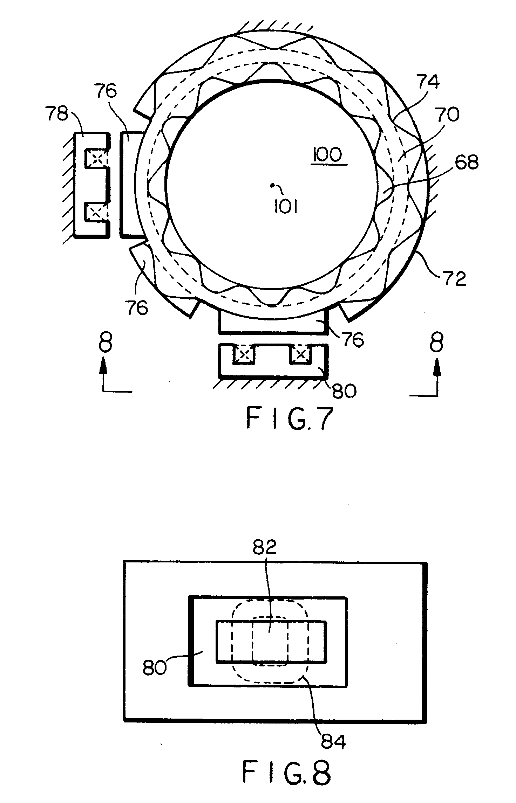

Figure 7 discloses a further embodiment of magnetic bearing 10 which is similar to the embodiment disclosed in Figure 6. Shaft 100 rotates on axis 101. Circumferential foil gas bearing 68 is placed circumferentially around shaft 100. Bearing ring 70 is placed circumferentially around foil gas bearing 68. Bearing housing 72, which includes inwardly facing bumps 74 complementary to the contour of circumferential foil gas bearing 68, includes a series of outwardly facing planar sections 76 which are attracted by electromagnets 78, 80. Electromagnets 78, 80 are selectively magnetized in response to radial excursions of shaft 100. The embodiment of Figure 7 uses both circumferential foil gas bearing 68 and electromagnets 78, 80 to counteract radial excursions of shaft 100. Figure 8 illustrates that electromagnet 80 is formed by a core 82 around which wires are spooled to form an electromagnetic coil 84.

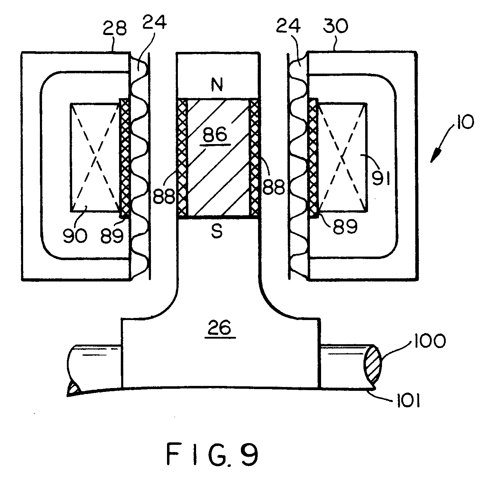

Figure 9 discloses an additional embodiment of magnetic bearing 10. Shaft 100 rotates upon axis 101. Rotor 26 is in a thrust disk configuration. Rotor 26 includes permanent magnetic ring 86 in a medial circumferential position thereon. The polarization of magnetic ring 86 is radially oriented so that a first polarity (illustrated as north in Figure 9) is on an outward circumferential portion of ring 86 while a second polarity (illustrated as south in Figure 9) is on an inward circumferential portion of ring 86. Non-magnetic backing material 88 is placed on lateral sides of magnetic ring 86 outwardly facing stator walls 28 and 30. Stator walls 28, 30 have planar foil gas bearings 24 facing inwardly to rotor 26 and parallel to the lateral sides of rotor 26. Non-magnetic backing material 89 (similar to material 88 on the magnetic ring 86) are on outward sides of planar foil gas bearings 24 thereby separating planar foil gas bearings 24 from magnetizing coils 90, 91. Therefore, axial or longitudinal excursions (i.e., thrusts) of shaft 100 can be counteracted by either planar foil gas bearings 24 and/or the interaction of magnetic ring 86 and magnetic coils 90, 91.

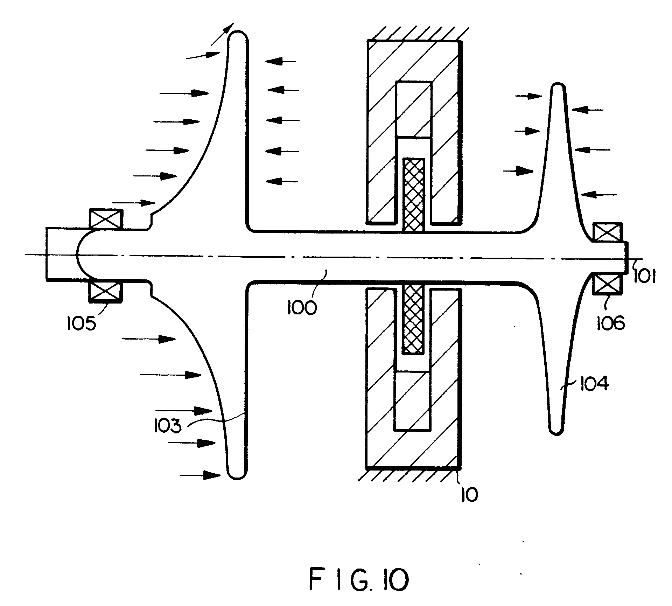

Figure 10 discloses a magnetic/foil gas bearing 10 in an environment wherein a shaft 100, which includes an impeller 102 and a turbine 103 is supported by conventional mechanical bearings 105, 106.

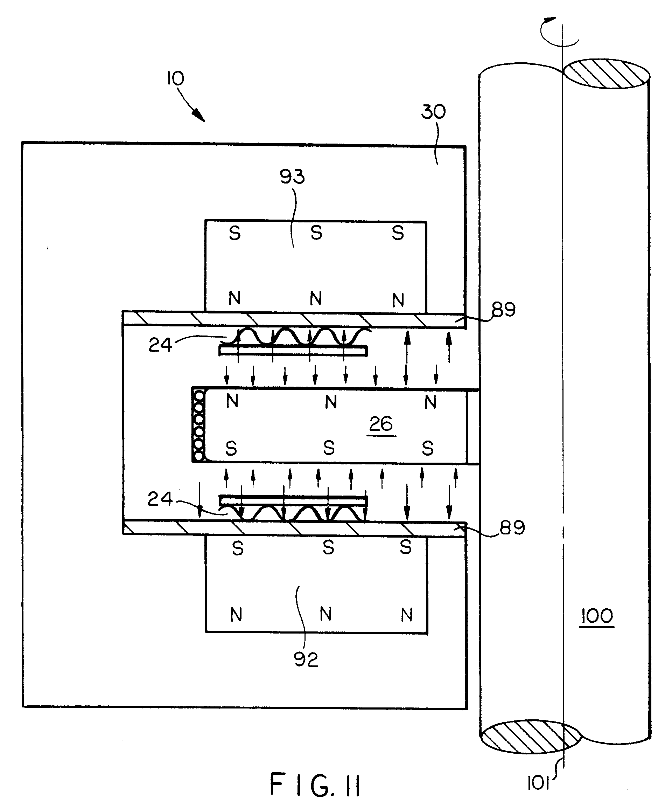

Figure 11 shows the magnetic/foil gas bearing 10 of Figure 10 in more detail. Shaft 100 rotates on axis 101. Rotor 26 includes a permanent magnet polarized in a direction parallel to axis 101. Stator walls 28, 30 include inwardly facing planar foil gas bearings 24. Outwardly from planar foil gas bearings 24 is non-magnetic backing material 89 thereby separating planar foil gas bearings 24 from permanent stator magnets 92, 93 which are polarized in a direction parallel to axis 101 but opposite from the polarization of rotor 26. Therefore, axial or longitudinal excursions (i.e., thrusts) of shaft 100 can be counteracted by either planar foil gas bearings 24 and/or the interaction of the permanent magnets of rotor 26 and permanent stator magnets 92, 93.

Thus the several aforementioned objects and advantages are most effectively attained. Although a number of preferred embodiments of the invention have been disclosed and described in detail herein, it should be understood that this invention is in no sense limited thereby and its scope is to be determined by that of the appended claims.

## Claims

1. In a magnetic bearing of the type including a rotor on a rotating shaft and a stator, said stator including magnetic elements for the stabilization of said rotor with respect to said stator, the improvement comprising the magnetic bearing further including a foil gas bearing component to counteract excursions of said shaft.

2. The improvement of Claim 1 wherein said foil gas bearing component is placed circumferentially outward from the rotating shaft and inward from said magnetic elements of said stator, said foil gas bearing component and said magnetic elements counteracting radial excursions of said shaft.

3. The improvement of Claim 2 wherein said magnetic elements of said stator include electromagnetic coils with a core parallel to said rotating shaft.

4. The improvement of Claim 1 wherein said stator includes a first wall on a first side of said rotor and a second wall on a second side of said rotor, said first wall including said foil gas bearing component, said foil gas bearing component being planar and parallel to said rotor, said second wall including said magnetic elements, said magnetic elements and said foil gas bearing component counteracting axial thrusts of said shaft and said rotor.

5. The improvement of Claim 4 wherein said magnetic elements of said stator include electromagnetic coils with a core parallel to said rotating shaft.

6. The improvement of Claim 1 wherein said rotor and stator include radially successive magnetic rings of alternating polarity, and wherein said stator includes said foil gas bearing component, said foil gas bearing component being cylindrical, said shaft passing through said cylindrical foil gas bearing component, said foil gas bearing component counteracting radial excursions of said shaft and said magnetic rings counteracting axial thrusts of said shaft.

7. The improvement of Claim 6 wherein successive magnetic rings of said rotor have polarities which are equal and aligned with respective successive magnetic rings of said stator.

8. The improvement of Claim 7 wherein said successive magnetic rings are permanent magnets.

9. The improvement of Claim 1 wherein said stator comprises a magnetic disk with a laterally extending lip around a circumference thereof, said foil gas bearing component being cylindrical and being engaged by said laterally extending lip, said rotor being a cylindrical abutting said stator, wherein said stator, foil gas bearing component and said rotor are rotationally symmetric about said shaft.

10. The improvement of Claim 1 wherein said foil gas bearing component is cylindrical and affixed to an interior of said stator, said rotor passing through said cylindrical foil gas bearing component, said stator further including a cylindrical structure outward from said cylindrical foil gas bearing component and including inwardly pointing radially directed cores about which electromagnetic coils are wound thereby forming said magnetic elements of said stator.

11. The improvement of Claim 10 wherein said stator comprises a laminated material.

12. The improvement of Claim 1 wherein said foil gas bearing component is formed integrally and circumferentially around said shaft, a bearing ring being formed circumferentially around said foil gas bearing component, and a bearing housing formed circumferentially around said bearing ring; said bearing housing including inwardly facing undulations complementary to undulations on an exterior of said foil gas bearing component, said bearing housing further including outwardly facing planar regions which are responsive to said magnetic elements of said stator; said foil gas bearing component and said magnetic elements being responsive to radial excursions of said shaft.

13. The improvement of Claim 12 wherein said magnetic elements of said stator include a plurality of electromagnetic coils with cores aligned with a radius of said shaft.

14. The improvement of Claim 1 wherein said rotor includes a radially polarized magnetic ring, and said stator includes a first wall on a first side of said rotor and a second wall on a second side of said rotor, said first wall including said foil gas bearing component, said foil gas bearing component being planar and parallel to said rotor, said first and second walls including said-magnetic elements, said magnetic elements and said foil gas bearing component counteracting axial thrusts of said shaft and said rotor.

15. The improvement of Claim 14 wherein said radially polarized magnetic ring is a permanent magnet.

16. The improvement of Claim 1 wherein said rotor includes a longitudinally polarized magnetic ring, and said stator includes a first wall on a first side of said rotor and a second wall on a second side of said rotor, said first wall including said foil gas bearing component, said foil gas bearing component being planar and parallel to said rotor, said first and second walls including said magnetic elements, said magnetic elements and said foil gas bearing component counteracting axial thrusts of said shaft and said rotor.

17. The improvement of Claim 16 wherein said longitudinally polarized magnetic ring is a permanent magnet.

18. The improvement of Claim 17 wherein said magnetic elements are longitudinally polarized but oppositely polarized from said longitudinally polarized magnetic ring.
